# EUROPEAN PATENT APPLICATION

(11) **EP 3 633 252 A1**
(43) Date of publication of application: **08.04.2020**
(21) Application number: 18207597.8
(22) Date of filing: 21.11.2018
(51) Int. Cl.: F16K 31/06, F16K 11/044

(54) **ELECTROMAGNETIC FLUID VALVE**

(30) Priority: 01.10.2018 EP 18197968
(71) Applicant: WABCO Europe BVBA, 1170 Brüssel (BE)
(72) Inventor: BIALON, Rafal, 55-200 Olawa (PL); DEDICH, Tomasz, 54-620 Wroclaw (PL); IWANIEC, Wojciech, 54-620 Wroclaw (PL)
(74) Representative: Koschnitzki, Thomas

(57) **Abstract**

The invention relates to a solenoid fluid valve (1), in particular for pneumatic applications, wherein said fluid valve (1) comprises:
- an inner valve core (16) extending along an axial direction (A),
a movable part (8) displaceable between a basic position and an activated position, for closing and opening at least one valve seat,
- an outer yoke (15),
- a spring (26) for biasing said movable part (8) into its basic position,
- an electromagnetic coil (20) to be energized for creating a magnetic circuit (42) flowing through said inner valve core (16), said outer yoke (15) and said movable part (8), for switching said movable part (8) into said activated position, wherein said inner valve core (16), said movable part (8) and said outer yoke (15) are made at least partially of a magnetic material,
characterized in that
said movable part (8) is realized as a valve plate (8) extending in radial direction beyond an end part of the inner valve core (16) and comprising at least one sealing face for contacting at least one valve seat.

## Description

The invention relates to an solenoid fluid valve. In particular, the fluid valve may be a pneumatic valve, in particular, a 3/2-valve or a 2/2-valve. It is suitable for application, in particular, in a pneumatic system of a commercial vehicle.

In solenoid valves, an armature is biased by a spring thereby defining a basic position or basic state, which can be the closed or the open state of the valve. For switching the valve into its other position or state, an electromagnetic coil is energized thereby creating a magnetic flux flowing through a static core and/or static yoke and the displaceable armature, which armature in general is pulled by the magnetic force against the spring bias thereby closing an air gap between the armature and the core.

The efficiency of the magnetic circuits is generally limited. Further a high number of components is necessary, resulting in high costs.

DE19500767C2 discloses a drive device for creating a linear movement, in particular for a valve actuation, comprising a casing for receiving a fluid and a diaphragm plate. The diaphragm plate comprises a diaphragm disc and a rolling diaphragm, fixed to each other by firmly bonding. The rolling diaphragm is fixed to the casing; during the displacement of the diaphragm plate the rolling diaphragm is formed or "rolled". De 10201111565A1 describes a similar valve with a valve part comprising a casing and a movable valve body, which valve body is displaced by an actor. The actor is separated from the valve part by a sealing element realized by a diaphragm, which is fixed between the casing and an adapter part.

EP2131416A1 discloses an excessive pressure release valve which comprises an elastic rubber plate having an upper surface and a lower surface; and a reversibly openable and closable slit passing through the upper and lower surfaces of the elastic rubber plate for releasing an internal excessive pressure to the external world when the slit is pushed and opened toward the upper surface side by the internal excessive pressure stressing on the lower surface side of the elastic rubber plate. The elastic rubber plate has preferably a thick portion at a peripheral portion and a dent at a central portion of the lower surface side of the elastic rubber plate and the slit passing through a central flat portion of the dent.

EP 2829290A1 shows a drive unit for a drug delivery device, comprising a carrier, a plunger arranged within the carrier and slidable in a direction of a longitudinal axis, a drive spring arranged for biasing the plunger in a distal direction relative to the carrier, and a drive force adaption mechanism for modifying a spring force of the spring.

Problem of the invention is to create a fluid valve which can be made with little effort and allows the switching of high fluid currents.

This problem is solved by a solenoid fluid valve according to claim 1. The subclaims describe preferred further developments.

The solenoid fluid valve may be, in particular, a pneumatic valve, in particular, a 3/2-valve. Further, it can be realized e.g. as a 2/2-valve or blocking valve.

According to the invention a valve plate is provided as magnetic moveable part. Preferably the valve plate is the only part which is displaced by the magnetic flux, together with the biasing spring. Further, valve caps can be moved indirectly by the flowing fluid, but not by the magnetic flux.

The valve plate preferably comprises a sealing means, in particular in its central portion, in particular a vulcanized rubber pad, which enables a stable and robust connection to the metallic part of the valve plate.

According to a preferred embodiment the sealing means comprises sealing faces on its two sides, i.e. its upper side and its lower side, in order to realize two valve seats with only one sealing part.

Thus two air gaps can be realized by the valve plate, each of them being closed in one position and open in the other one, respectively.

These features already enable a small displaceable magnetic movable part, i.e. the valve plate, and large air gaps.

Further an advantageous magnetic flux flow between the valve plate and the inner core of the valve can be realized by forming a central recess at the plate side adjacent to the inner core, preferably the plate side on which the spring acts. This recess can be realized by a rib protrusion surrounding the central recess. The central recess is provided in particular for receiving a top part of the inner core during an initial stroke distance of the valve plate, in particular an initial stroke when the valve plate detaches from the valve seat. This initial stroke is created by energizing the coil, which results in a magnetic flux flowing through an air gap between the inner core and the valve plate.

Thus due to a plate design with a central recess and/or a rib 36 protruding into the direction opposite to the moving direction of the plate the initial stroke of the rib or the recess wall is partially parallel to the inner core and thus the magnetic flux between the inner core and the rib does not change so much as in the case of two parts opposite to each other in the moving direction.

The inventive arrangement enables a magnetic flux from the top part of the inner core at least partially in a radial or transversal direction through the air gap to the valve plate, in particular to the inner rib of the valve plate within the initial stroke.

Thus the magnetic flux is changing or varying relatively little, compared to a conventional system with a rod-shaped magnetic core and a rod-shaped moveable armature. Thus a soft detaching is possible, which leads to a better valve behaviour, less friction and less wear of the parts. Further, the typical stroke and acoustic shock is diminished.

The protruding rib can in particular be an inner rib formed within a rim, in particular an inner rim, which serves for conducting the magnetic flux to the outer yoke.

The rim or another part of the valve plate can be guided in the outer yoke in order to establish a relatively continuous flux between these magnetic parts during the displacement.

The invention offers several advantages:
The magnetic circuit of the solenoid valve can be improved. It is possible to realize higher air flows of the valve. Further the number of components can be reduced, in particular by removal of a guide rod and a possible replacement of the conventional armature with a valve plate, in particular a valve plate with a vulcanized sealing means. Thus the costs can be reduced due to a simplified assembly, further removing the number of displaceable or moving components lead to an enhanced reliability and less wear or abrasion.

Further an improvement of the functional relation of the valve force over the stroke is possible.

According to the invention the steep characteristic curve of conventional valves comprising a displaceable armature realized by a rod- like piston is turned into an approximately horizontal curve.

An advantage of the invention is therefore the reduced amount of valve components while maintaining the valve function, for example a 3/2 valve function or 2/2 valve function. The general physical principles of a conventional valve, e.g. a conventional 3/2 valve and the inventive valve plate are familiar.

In addition, the valve plate according to the inventive fluid valve may work in both the normally open (NO) and the normally closed (NC) configuration.

The invention enables higher forces in relation to the envelope dimensions, which results
- in the opportunity to use bigger air flows (for example above NW 4 mm),
- further to a reduced size of contact surfaces, which results in extended life of the components and gives the opportunity to replace expensive stainless steel by cheaper steel with surface protection,

Furthermore, the inventive solution realizes an increased air gap and proportional control of the plate by a horizontal characteristic curve.

Contrary to e.g the abome mentioned DE19500767C2, the valve plate is preferably separated from said inner valve core and/or not connected to said inner valve core by a rolling diaphragm. Thus these parts are preferably separate parts.

The invention can be used in many types of valves.

The invention is hereinafter described in detail with reference to the appended drawings, in which:
- Fig. 1: shows a cross-section of an electro-pneumatic 3/2 valve according to an embodiment of the invention in its closed basic position;
- Fig. 2: an enlarged detail of Fig. 1;
- Fig. 3: shows a cross-section of a 3/2 valve as electro-pneumatic valve according to a detailed embodiment of the invention, in its basic closed position;
- Fig. 4: the valve of Fig. 3 in its actuated open position;
- Fig. 5: a schematic diagram of the magnetic force between two flux conducting parts, in dependence of their relative distance;
- Fig. 6: a schematic diagram of the magnetic force between the valve plate and the valve core according to a preferred embodiment;
- Fig. 6a: an enlarged detail of Fig. 6

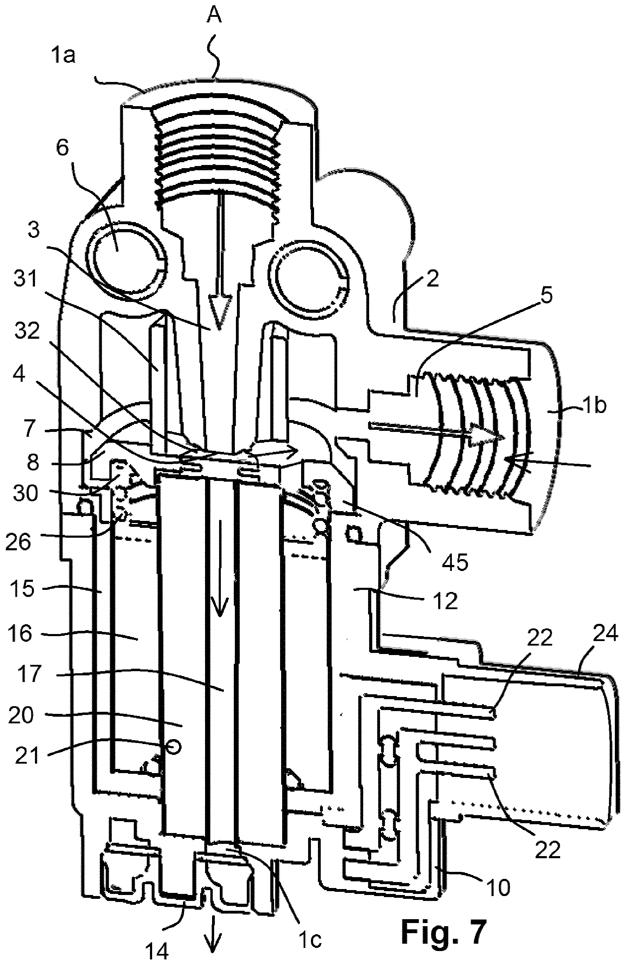

- Fig. 7: a perspective cross-sectional view of an embodiment corresponding to Fig. 4.

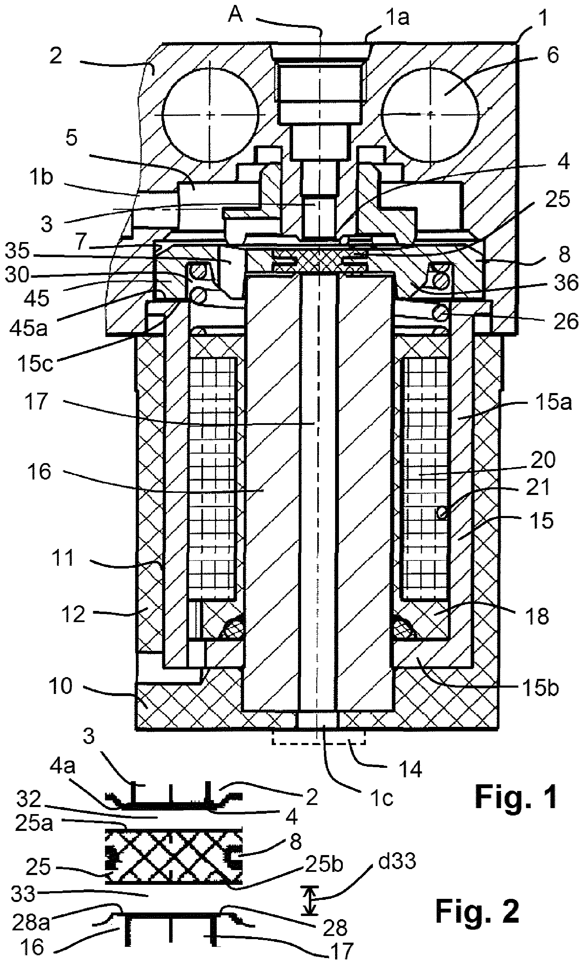

Figure 1 shows a pneumatic 3/2 valve 1 comprising an inlet port 1a, an outlet port 1b and an exhaust port 1c. The inlet port 1a and the outlet port 1b are provided in a valve connection body (upper valve body) 2, which further comprises an inlet channel 3 extending from the inlet port 1a to an inlet valve seat 4, an outlet channel 5 extending from the inlet valve seat 4 to the outlet port 1b, mounting holes 6 for mounting the valve 1, and a cylindrical outer face realized by guiding ribs localized preferably on the external part of the inlet channel 7 for guiding a displaceable valve plate 8.

The valve connection body 2 is connected to a lower valve body 10 comprising a valve coil body 11 and an overmolded plastic housing 12. The exhaust port 1c is provided in the overmolded plastic housing 12 and protected by an exhaust cap 14 fixed to the overmolded plastic housing 12.

Further a yoke 15 is provided in the lower valve body 10, or it is part of the lower valve body 10. Inside the yoke 15 a valve core 16 surrounding an exhaust channel 17 and a bobbin 18 surrounding the valve core 16 are provided. A valve coil 20 made of copper wire 21 is supported by the bobbin 18 and electrically connected to electrical pins 22, which are extending in an electrical socket connection 24 for receiving an electrical plug, said electrical socket connection 24 being formed in particular in the plastic housing 12.

The valve plate 8 is cup-shaped and comprises in its central area a vulcanized rubber sealing pad 25 with a (first) upper sealing face 25a and a (second) lower sealing face 25b. A spring 26, in particular a screw spring 26, is provided between the lower valve body 10 and the valve plate 8 and biases the valve plate 8 with its upper sealing face 25a against the inlet valve seat 4, thereby closing the inlet valve 4 and defining the non-activated basic position. In the actuated position the valve seat 8 is pressed with its lower (second) sealing face 25b against an exhaust valve seat 28 formed e.g. in the valve core 16. As can be seen from Fig.2, the valve seats 4 and 28 are preferably formed with valve cones 4a and 28a, respectively, serving as bumps for providing a defined sealing contact with the sealing faces 25a, 25b of the rubber sealing pad 25.

In its peripheral areas the cup-shaped valve plate 8 comprises a circular spring recess 30 for receiving the spring 26 and a plate edge 45, which is preferably cylindrical and extends into the axial direction A. The plate edge 45 comprises a ring-shaped stop face 46, which may serve for contacting an adjacent yoke contact stop 15c in the actuated open position; however, this contact is only additional to the stop defined by the lower face 25b of the rubber sealing pad 25 contacting the second cone 28a, since in each position the valve plate 8 is pressed with its rubber sealing pad 25 against one of the valve cones 4a, 28a, respectively, in order to secure a tight sealing.

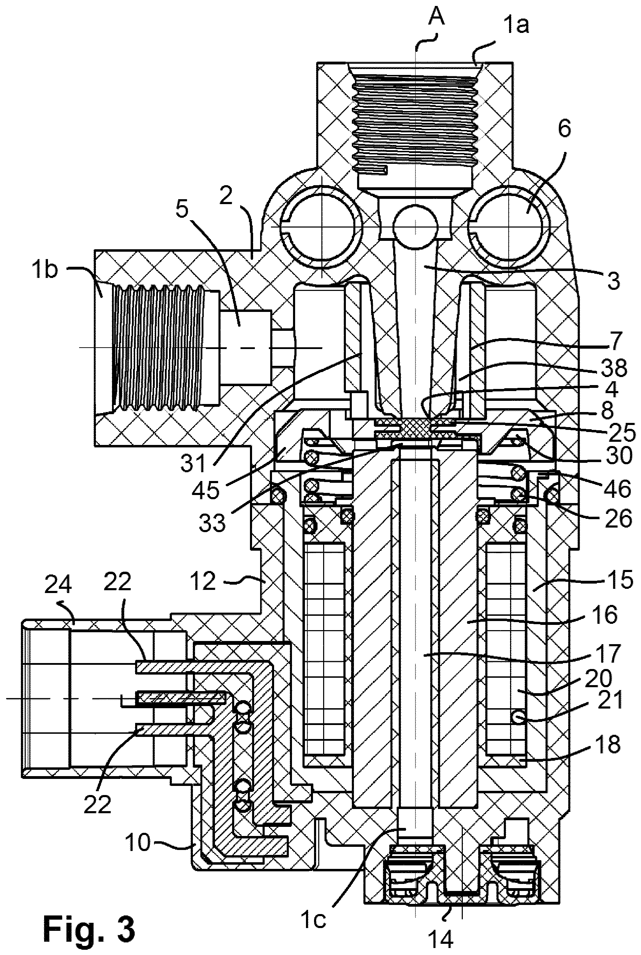

In the non-activated closed basic position, i.e. with not energized coil 20,
the spring 26 presses the upper sealing face 25a against the inlet valve seat 4 thereby blocking the inlet channel 3 and forming a lower air gap 33 between the plate 8 and the exhaust valve seat 28, as can be seen from Fig. 3. Thus outlet port (delivery port) 1b is connected to the exhaust port 1c via the outlet channel (delivery channel) 5, one or more exhaust holes 35 formed in the valve plate 8, the lower air gap 33 , the open exhaust valve seat 28, and the exhaust channel 17.

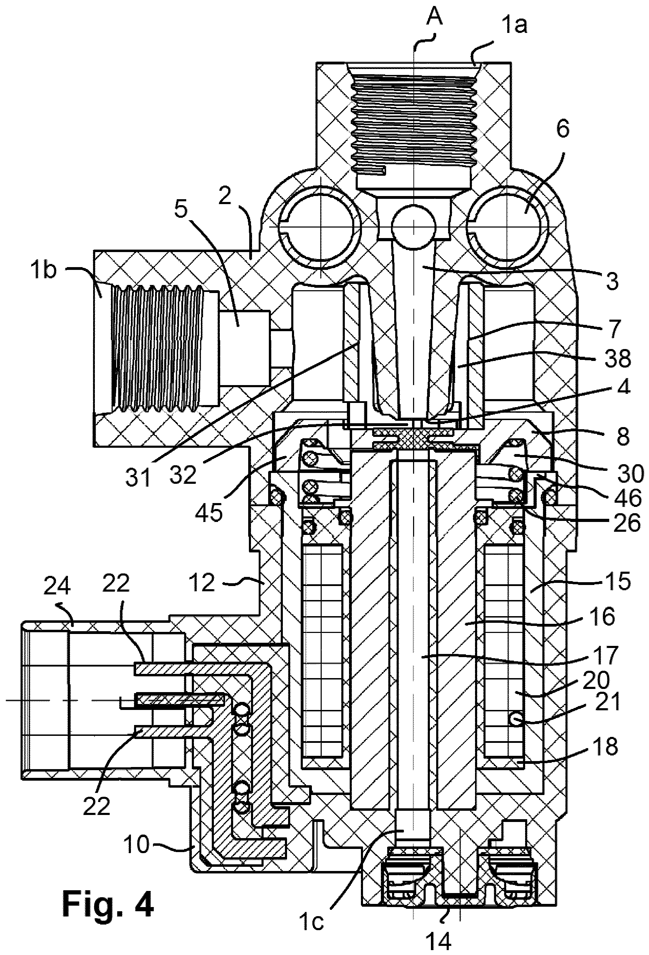

The valve 1 is switched into ist activated open position by energizing the coil 20 via the electrical socket connection 24. The coil 20 creates a magnetic flux 40 flowing in axial direction A along the core 16, through the lower air gap 33 to the valve plate 8, and back along the yoke 15 to the core 16, thereby forming a magnetic flux circuit 42. The magnetic force pulls the valve plate 8 downwards, against the bias of the spring 26, and thus the valve plate 8 contacts the second valve cone 28a of the exhaust valve seat 28 formed at the top of the core 16, thereby closing the lower air gap 33 and opening the upper air gap 32, as can be seen from Fig. 4. This movement of the valve plate 8 can be guided by the outer face realized by guiding ribs localized preferably on the external part of the inlet channel 7 contacting the outer perimeter of the inner guiding contour 31a or guiding surface of the valve plate 8, and/or by a cylindrical inner rib 36 protruding from the valve plate 8 downward, which inner rib 36 can be guided e.g. at the cylindrical outer face of the valve core 16. In particular, a guidance can be realized by the guiding contour 31a sliding along the ribs 38 formed at the valve inlet channel 3 in the upper valve body 2. The inner plate contour ribs 38 are provided for guiding the valve plate 8, in particular the inner guiding contour 31a of said valve plate 8, thereby enabling a magnetic flow between said valve plate 8 and the outer yoke 15 during the displacement of said valve plate 8 without an air gap between them. This enables a continuous magnetic flow between them without sudden change.

In activated position, end stops 46, or an end stop contour, realized from thermoplast material protect the valve plate 8 from mechanical damage during contact between the valve plate 8 and the yoke 15. Additional feature of the end stops 46 is to avoid the saturation of the magnetic circuit and so called magnetic sticking effect between the valve plate 8, and the yoke 15

In this activated open position air can flow from the open inlet valve seat 4 through the upper air gap 32 to the outlet channel 5 and then to the outlet port 1b. The exhaust valve seat 28 is closed by the second sealing face 25b pressing against the second valve cone 28a.

The valve core 16, the yoke 15 and the valve plate 8 are made from ferromagnetic metal, in particular, ferromagnetic steel, for defining the magnetic flow circuit 42.

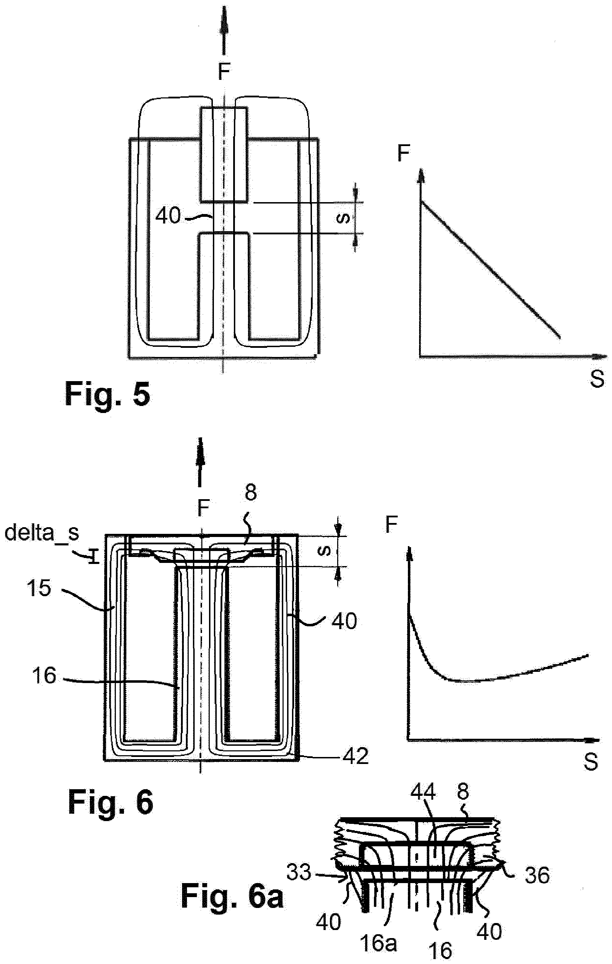

The cylindrical inner rib 36 can serve as a guiding means for the displacement of the valve seat 8, as described above. Further, the cylindrical inner rib 36 is helpful for defining the circular spring recess 30 for receiving the spring 26. However, a main advantage of the inner rib 36 is its magnetic performance for the magnetic flux flow characteristic and the displacement of the valve plate 8, as described hereinafter with reference to figures 5, 6 and 6a:
In the closed basic position of e.g. figure 3 the magnetic flux 40 flows from the end part 16a (top part) of the valve core 16 via the lower air gap 33 to the bottom face of the valve plate 8. If the lower air gap to be closed by the magnetic force is formed as depicted in Fig. 5, then the magnetic force F is linearly dependent on the stroke S or distance, i.e. on the distance d33 of the lower air gap 33. This results in a steep increase of the magnetic force when energizing the coil 20, which then results in a stroke-like displacement of the valve plate 8.

The steep force over stroke characteristic causes a rapid loss of force during the increasing stroke, which directly limits the maximum lower air gap 33 created by the conventional armature and valve seat and maximum force of the spring 26, which presses the armature onto the valve seat. The maximum spring force has direct impact on the value of the maximum air flow in the valve 1, i.e. the efficiency of the valve 1. In such a design the force generated by the electromagnetic circuit can be increased only by enlarging the circuit components, which is a very expensive approach. The amount of necessary components is known and there is no other opportunity to increase the created coil force to reduce high flow valve cost.

However, according to the embodiment of Fig. 6 the inner rib 36 surrounds a recess 44 in the bottom face of the valve plate 8. The magnetic flux 40 therefore can flow in axial direction A and "diagonal" direction, i.e. partially in radial direction from the top area 16a of the valve core 16 to the rib 36. This enables a softer transition of the displacement movement, as can be seen from the diagram of Fig. 6:
when the valve plate 8 moves upwards, i.e. the stroke S and therefore the distance d33 of the lower air gap 33 is increasing, the force F is initially decreasing, similar to the embodiment of Fig. 5, since the increasing air gap 33 weakens the magnetic flux 40. However, when the stroke S is further increasing, this steep decrease is stopped, and it may be turned into an increase, or it may flatten out, since the magnetic flux 40 can flow in transverse direction through the air gap 33 and therefore it is not as dependent on the stroke S or distance d33 of the lower air gap 33.

Thus due to a plate design with the central recess 44 and/or the rib 36 protruding into the direction opposite to the moving direction of the plate the initial stroke of the rib 36 is partially "parallel" to the inner core and thus the magnetic flux between the inner core and the rib does not change so much as in the case of two parts opposite to each other in the moving direction.

### List of reference numerals (part of the description)

- 1: pneumatic 3/2-valve
- 1a: inlet port
- 1b: outlet port
- 1c: exhaust port
- 2: valve connection body (upper valve body)
- 3: inlet channel
- 4: inlet valve seat
- 4a: first valve cone
- 5: outlet channel
- 6: mounting holes
- 7: cylindrical outer guiding face
- 8: displaceable valve plate

- 10: lower valve body
- 11: valve coil body
- 12: overmolded plastic housing
- 14: exhaust cap
- 15: yoke
- 15a: cylindrical part of the yoke 15
- 15b: bottom part of the yoke 15, radially extending to the valve core 16
- 15c: contact stop of the yoke (upper face of the yoke 15) for stopping the valve plate 8

- 16: valve core
- 16a: end part, in particular top part of the valve core 16
- 17: exhaust channel
- 18: bobbin
- 20: valve coil
- 21: copper wire
- 22: electrical pins
- 24: electrical socket connection
- 25: rubber sealing pad
- 25a: first face, upper face
- 25b: second face, lower face
- 26: screw spring
- 28: exhaust valve seat
- 28a: second valve cone

- 30: circular spring recess of the valve plate 8 for receiving the spring 26
- 31: inner rim, provided at valve plate 8 or being part of valve plate 8
- 31a: guiding contour of valve plate 8, preferably at the rim 31

- 32: upper air gap, between the plate 8 and the inlet valve seat 4
- 33: lower air gap, between the plate 8 and the exhaust valve seat 28
- 35: exhaust holes in the valve plate 8
- 36: cylindrical inner rib of the valve plate 8
- 38: guiding ribs formed at valve inlet channel 3 in the upper valve body 2
- 40: magnetic flux
- 42: magnetic flux circuit
- 44: central recess in the bottom face of the valve plate 8
- 45: (outer) edge of the valve plate 8
- 45a: stop of the valve plate 8 for contacting the yoke contact stop 15c
- 46: Plastic end stops

- A: longitudinal axis, axial direction
- d33: distance of the lower air gap 33

## Claims

1. Solenoid fluid valve (1), in particular for pneumatic applications, wherein said fluid valve (1) comprises:
- an inner valve core (16) extending along an axial direction (A),
a movable part (8) displaceable between a basic position and an activated position, for closing and opening at least one valve seat (4a, 28a),
- an outer yoke (15),
- a spring (26) for biasing said movable part (8) into its basic position,
- an electromagnetic coil (20) to be energized for creating a magnetic circuit (42) flowing through said inner valve core (16), said outer yoke (15) and said movable part (8), for switching said movable part (8) into said activated position,
wherein said inner valve core (16), said movable part (8) and said outer yoke (15) are made at least partially of a magnetic material, **characterized in that**
said movable part (8) is realized as a valve plate (8) extending in radial direction beyond an end part (16a) of said inner valve core (16) and comprising at least one sealing face (25a, 25b) for contacting at least one valve seat (4a, 28a).

2. Solenoid fluid valve (1) according to claim 1,
**characterized in that** said valve plate (8) comprises a first sealing face (25a) for contacting a first valve seat (4a) in its basic positon and a second sealing face (25b) for contacting a second valve seat (28a) in its activated positon.

3. Solenoid fluid valve (1) according to claim 2,
**characterized in that** said first and second sealing faces (25a, 25b) are realized on opposite sides of a sealing means (25), which is pressed against either a first valve seat (4a) thereby opening a second valve seat (28a) or against the second valve seat (28a) thereby opening the first valve seat (4a).

4. Solenoid fluid valve (1) according to claim 3,
**characterized in that** the sealing means is a sealing rubber pad (25), in particular a central sealing rubber pad (25) vulcanized to a metal part of the valve plate (8).

5. Solenoid fluid valve (1) according to one of claims 2 to 4,
**characterized in that** said valve (1) comprises at least three ports (1a, 1b, 1c), in particular as a 3/2-valve (1) with two positions and three ports, for example a supply port (1a), a delivery port (1b) and an exhaust port (1c).

6. Solenoid fluid valve (1) according one of the claims 2 to 5,
**characterized in that** the end positions of the valve plate (8) are defined by the contact of the sealing faces (25a, 25b) at the valve seats (4a, 28a).

7. Solenoid fluid valve (1) according to claim 6,
**characterized in that** at least in one of the two positions a fallback stop or secure stop (15c) of the valve plate (8) is provided for stopping the valve plate (8), if at least one of said sealing faces (25a 25b) is strongly or exceedingly deformed.

8. Solenoid fluid valve (1) according one of the preceding claims, **characterized in that** said valve plate (8) comprises
- a central flat portion with a smaller thickness in said axial direction (A) and
- an outer edge (45) with a thickness in said axial direction (A), which is greater than the thickness of said central flat portion, said edge (45) extending in particular in said axial direction (A).

9. Solenoid fluid valve (1) according to claim 8,
**characterized in that** said valve plate (8) is cup-shaped, wherein said edge (45) is extending in axial direction (A) towards said outer yoke (15), in particular for closing the magnetic circuit (42).

10. Solenoid fluid valve (1) according to claim 8 or 9,
**characterized in that** said spring (26) is a screw spring (26) received inside the edge (45) of said valve plate (8).

11. Solenoid fluid valve (1) according one of the preceding claims,
**characterized in that** said valve plate (8) comprises at least one hole (35) for enabling a fluid transfer between a first side, for example upper side, and a second side, for example bottom side, of said valve plate (8), wherein said at least one hole (35) is provided radially outside of the at least one sealing face (25a, 25b).

12. Solenoid fluid valve (1) according one of the preceding claims,
**characterized in that** said valve plate (8) comprises a central recess (44) for receiving said top part (16a) of said inner core (16), in order to enable a magnetic flux at least partially in a transverse or radial direction from said top part (16a) of said inner core (16) to said valve plate (8) within an initial stroke distance (delta_S) of the displacement of said valve plate (8).

13. Solenoid fluid valve (1) according to claim 12,
**characterized in that** said central recess (44) is surrounded by a protruding rib (36) formed in the magnetic material of said valve plate (8),
said protruding rib (36) enabling a radial or transverse flow of said magnetic flux (40) from the top part (16a) of said inner core (16) to said protruding rib (36) in said initial stroke distance (delta_S).

14. Solenoid fluid valve (1) according one of the preceding claims,
**characterized in that** the magnetic circuit (42) flows only through said inner core (16), said valve plate (8) and said outer yoke (15).

15. Solenoid fluid valve (1) according one of the preceding claims,
**characterized in that** said valve plate (8) and said spring (26) are the only moveable parts which are displaced by said magnetic flux action.

16. Solenoid fluid valve (1) according one of the preceding claims,
**characterized in that** grooves (38) are formed at the top of said outer yoke (15), for guiding said valve plate (8), in particular a guiding contour (31a) of said inner rim (31) of said valve plate (8), thereby enabling a magnetic flux flow between said valve plate (8) and said outer yoke (15) in at least a part of said displacement of said valve plate (8) without air gap between them.

17. Solenoid valve (1) according to one of the preceding claims,
**characterized in that** said valve plate (8) is separated from said inner valve core (16) and/or not connected to said inner valve core (16) by a flexible member, e.g. a rolling diaphragm.
